# EUROPÄISCHE PATENTSCHRIFT

(11) **EP 3 183 142 B1**
(45) Veröffentlichungstag und Bekanntmachung des Hinweises auf die Patenterteilung: **26.09.2018**
(21) Anmeldenummer: 15750996.9
(22) Anmeldetag: 13.08.2015
(51) Int. Cl.: B60R 19/48, G01S 7/521

(54) **VERKLEIDUNGSVORRICHTUNG FÜR EIN KRAFTFAHRZEUG, ANORDNUNG, KRAFTFAHRZEUG SOWIE HERSTELLUNGSVERFAHREN**
TRIM DEVICE FOR A MOTOR VEHICLE, ASSEMBLY, MOTOR VEHICLE, AND PRODUCTION METHOD
DISPOSITIF D'HABILLAGE POUR UN VÉHICULE AUTOMOBILE, SYSTÈME, VÉHICULE AUTOMOBILE ET PROCÉDÉ DE FABRICATION

(30) Priorität: 21.08.2014 DE 102014111947
(43) Veröffentlichungstag der Anmeldung: 28.06.2017
(73) Patentinhaber: Valeo Schalter und Sensoren GmbH, 74321 Bietigheim-Bissingen (DE)
(72) Erfinder: ROSTOCKI, Paul-David, 74321 Bietigheim-Bissingen (DE); GOTZIG, Heinrich, 74321 Bietigheim-Bissingen (DE)
(86) Internationale Anmeldenummer: PCT/EP2015/068657
(87) Internationale Veröffentlichungsnummer: WO 2016/026766

(56) Entgegenhaltungen:
- US-A1- 2007 062 292
- US-A1- 2008 089 177

## Beschreibung

Die vorliegende Erfindung betrifft eine Verkleidungsvorrichtung für ein Kraftfahrzeug, mit einem Verkleidungsteil, welches einen Aufnahmebereich zum Anordnen eines Ultraschallsensors aufweist, und mit einer Dämpfungseinrichtung zum Dämpfen einer in Folge eines durch den Ultraschallsensor ausgesendeten Ultraschallsignals erzeugten Schwingung, wobei die Dämpfungseinrichtung den Aufnahmebereich zumindest bereichsweise umgibt. Die Erfindung betrifft außerdem eine Anordnung einer solchen Verkleidungsvorrichtung mit einem Ultraschallsensor. Zudem betrifft die vorliegende Erfindung ein Kraftfahrzeug mit zumindest einer solchen Anordnung. Schließlich betrifft die vorliegende Erfindung ein Verfahren zum Herstellen einer Verkleidungsvorrichtung für ein Kraftfahrzeug.

Ultraschallsensoren sind in bekannter Weise im Frontbereich und im Heckbereich des Kraftfahrzeugs, insbesondere an Stoßfängern, verbaut. Sie sind Fahrerassistenzsystemen zugeordnet und liefern Informationen über die Umgebung des Kraftfahrzeugs, nämlich über die Abstände zwischen dem Kraftfahrzeug einerseits und den in seiner Umgebung befindlichen Hindernissen andererseits. Derartige Fahrerassistenzsysteme können beispielsweise Parkassistenzsysteme, Systeme zur Totwinkelüberwachung, Systeme zur Abstandshaltung, Bremsassistenzsysteme oder dergleichen sein.

Des Weiteren ist es bereits Stand der Technik, dass derartige Ultraschallsensoren in Stoßfängern unverdeckt und somit sichtbar verbaut werden. Dies bedeutet, dass sie in durchgängigen Aussparungen in dem Stoßfänger angeordnet sind und außenseitig sichtbar sind. Eine topfförmige Membran des Ultraschallsensors erstreckt sich hier durch die durchgängige Aussparung des Stoßfängers hindurch, sodass die Frontseite der Membran, über welche Ultraschallwellen ausgesendet und empfangen werden, bündig mit der äußeren Oberfläche des Stoßfängers abschließt. Diese Ultraschallsensoren haben jedoch den entscheidenden Nachteil, dass sie sichtbar angeordnet sind und somit das gesamte optische Bild des Kraftfahrzeugs beeinträchtigen.

Deshalb richtet sich das Interesse vorliegend auf verdeckt beziehungsweise versteckt verbaute Ultraschallsensoren, welche bei einer Betrachtung des Stoßfängers von außen nicht sichtbar durch den Stoßfänger abgedeckt sind. Hier befindet sich der Ultraschallsensor an einer Rückseite des Stoßfängers, sodass die Frontseite der Membran - gegebenenfalls über einen zusätzlichen Montagedeckel - mit der Rückseite des Stoßfängers in Anlage gebracht ist. Bei derartig verbauten Ultraschallsensoren direkt hinter dem Stoßfänger werden die Ultraschallsignale durch das Material des Stoßfängers hindurch gesendet und empfangen. Somit schwingt ein Bereich des Stoßfängers zusammen mit der Membran des Ultraschallsensors. Es ist somit oft erforderlich, dass dieser schwingende Bereich des Stoßfängers mit Hilfe einer aus Keramik gebildeten Dämpfungseinrichtung begrenzt wird. Es ist beispielsweise bekannt, eine aus Keramik gebildete Dämpfungseinrichtung bereitzustellen, welches eine Durchgangsöffnung aufweist, durch welche sich die topfförmige Membran des Ultraschallsensors hindurch erstreckt, sodass das Versteifungselement um die Membran herum angeordnet ist und außerdem - gegebenenfalls über einen Montagedeckel - mit der Rückseite des Stoßfängers in Anlage gebracht ist. Ein derartiges Dämpfungselement ist beispielsweise in der DE 10 2011 105 017 A1 beschrieben.

Somit sind bei verdeckt hinter dem Stoßfänger verbauten Ultraschallsensoren jedoch wesentlich höhere Anforderungen an die Positionierung, die Klebung und die nun einzuhaltenden Toleranzen gegeben. Der Ultraschallsensor muss hinter dem Stoßfänger mechanisch fest angebracht werden. Dies ist erforderlich, damit der Ultraschallsensor verlustfrei durch den Stoßfänger senden kann. Um die Sende- und Empfangsverluste gering zu halten, muss die Sendefläche des Ultraschallsensors - als die Frontfläche der Membran - mechanisch fest mit dem Stoßfänger verbunden werden oder aber mit einem verlustfreien Koppelelement beziehungsweise Montagedeckel zwischen der Frontseite der Membran und dem Stoßfänger ausgebildet werden. Um die eingeleiteten Schwingungen lokal zu halten und die Sendecharakteristik zu beeinflussen, wird dann die oben genannte Dämpfungseinrichtung mit einem großen Elastizitätsmodul eng um den Wandler beziehungsweise um die Membran benötigt. Ein solcher Versteifungsring muss mechanisch fest mit dem Stoßfänger verbunden sein.

Darüber hinaus beschreibt die DE 10 2012 106 694 A1 eine Ultraschallsensorvorrichtung mit einem Versteifungselement und einem Montagedeckel. Die Ultraschallsensorvorrichtung weist ein Versteifungselement mit einer Durchgangsöffnung auf, durch welche sich die Membran hindurch erstreckt. Das Versteifungselement ist porös ausgebildet und über seine poröse Frontseite stoffschlüssig mit einem Montagedeckel verbunden. Die poröse Frontseite weist entsprechende Zähne beziehungsweise kleine Aussparungen auf.
Ferner beschreibt die WO 2012/175491 A2 eine Ultraschallsensorvorrichtung mit einem Dämpfungselement und einem Montagedeckel. Hierbei ist der Montagedeckel aus einem Kunststoffmaterial gebildet, welches an das Dämpfungselement angespritzt ist. Das Dämpfungselement kann zumindest eine Aussparung aufweisen, und der Montagedeckel kann zumindest einen Stift aufweisen, welcher in die zugeordnete Aussparung des Dämpfungselements eingreift, wobei der zumindest eine Stift durch das Anspritzen des Kunststoffmaterials gebildet wird.

Die US 20080089177 A1 offenbart eine Verkleidungsvorrichtung für ein Kraftfahrzeug gemäß dem Oberberggriff des Anspruchs 1. Es ist Aufgabe der vorliegenden Erfindung, ein Verfahren aufzuzeigen, wie die Schwingungen eines Ultraschallsensors, der verdeckt hinter einem Verkleidungsteil eines Kraftfahrzeugs angeordnet ist, einfacher und kostengünstiger gedämpft werden können.
Diese Aufgabe wird erfindungsgemäß durch eine Verkleidungsvorrichtung, durch eine Anordnung, durch ein Kraftfahrzeug sowie durch ein Verfahren mit den Merkmalen gemäß den jeweiligen unabhängigen Patentansprüchen gelöst. Vorteilhafte Weiterbildungen der vorliegenden Erfindung sind Gegenstand der abhängigen Patentansprüche. Eine erfindungsgemäße Verkleidungsvorrichtung für ein Kraftfahrzeug umfasst ein Verkleidungsteil, welches einen Aufnahmebereich zum Anordnen eines Ultraschallsensors aufweist. Darüber hinaus umfasst die Verkleidungsvorrichtung eine Dämpfungseinrichtung zum Dämpfen einer in Folge eines durch den Ultraschallsensor ausgesendeten Ultraschallsignals erzeugten Schwingung, wobei die Dämpfungseinrichtung den Aufnahmebereich zumindest bereichsweise umgibt. Die Dämpfungseinrichtung weist Bewegungselemente auf, die mit dem Verkleidungsteil verbunden sind, wobei eine jeweilige Formgebung und/oder eine mechanische Eigenschaft der Bewegungselemente derart ausgelegt ist, dass zumindest ein Teil der Bewegungselemente durch die Schwingung zu einer Bewegung angregbar ist.
Die Verkleidungsvorrichtung umfasst ein Verkleidungsteil, das beispielsweise als Stoßfänger oder als Kotflügel ausgebildet sein kann. Darüber hinaus umfasst die Verkleidungsvorrichtung eine Dämpfungseinrichtung, welche zum Dämpfen von mechanischen Schwingungen dient. Diese mechanischen Schwingungen bilden sich beispielsweise dann aus, wenn von dem Ultraschallsensor, der mit der Verkleidungsvorrichtung mechanisch verbunden ist, Schallwellen in das Verkleidungsteil eingekoppelt werden. Diese Schallwellen können sich beispielsweise in Folge eines Ultraschallsignals ausbilden, welches der Ultraschallsensor aussendet. Die Dämpfungseinrichtung umfasst eine Mehrzahl von Bewegungselementen, die mit dem Verkleidungsteil fest verbunden sind. Die Bewegungselemente können beispielsweise im Wesentlichen zylinderförmig oder kegelförmig ausgebildet sein. Die Bewegungselemente können bevorzugt jeweils nach Art einer Zotte ausgebildet sein.

Hierbei sind eine jeweilige Form und/oder eine mechanische Eigenschaft der Bewegungselemente derart ausgestaltet, dass zumindest ein Teil der Bewegungselemente durch die Schwingung zu einer Bewegung angeregt ist. Die geometrische Ausgestaltung und/oder die mechanischen Eigenschaften der jeweiligen Bewegungselemente können derart gestaltet sein, dass die Bewegungselemente infolge der Schwingung des Verkleidungsteils zu mechanischen Schwingungen angeregt werden. Beispielsweise kann die Resonanzfrequenz der Bewegungselemente derart ausgelegt sein, dass diese in Folge der mechanischen Schwingungen des Verkleidungsteils in Resonanzfrequenz schwingen. Dabei kann es auch vorgesehen sein, dass die Bewegungselemente unterschiedliche Resonanzfrequenzen aufweisen. Somit wird die Schwingungsenergie des Verkleidungsteils in eine Bewegungsenergie der Bewegungselemente gewandelt. Auf diese Weise kann die Schwingung des Verkleidungsteils gedämpft uns/oder lokal begrenzt werden.

Die Bewegungselemente dienen dazu, eine mechanische Schwingung des Verkleidungsteils zu dämpfen. Die Bewegungselemente können auch dazu dienen, Körperschall, der sich innerhalb des Verkleidungsteils ausbreitet, zu dämpfen. Weiterhin können die Bewegungselemente der Dämpfungseinrichtung dazu dienen, den Schwingungsbereich des Verkleidungsteils, das durch das Ultraschallsignal zu Schwingungen angeregt wird, zu begrenzen. Somit kann die Dämpfungseinrichtung den Bereich des Verkleidungsteils, der zusammen mit einer Membran des Ultraschallsensors schwingt, begrenzen. Die Dämpfungseinrichtung kann auch dazu dienen, den Bereich des Verkleidungsteils, in dem von dem Ultraschallsensor Ultraschallwellen eingekoppelt werden, zu begrenzen. Somit kann die Dämpfungseinrichtung anstelle einer Dämpfungseinrichtung, die aus Keramik gefertigt ist beziehungsweise die einen Keramikring umfasst, verwendet werden. Somit kann eine kostengünstige Dämpfungseinrichtung zum Dämpfen von Schwingungen eines Verkleidungsteils bereitgestellt werden.

Bevorzugt sind die Bewegungselemente derart mit dem Verkleidungsteil verbunden, dass sich die Bewegungselemente im Wesentlichen senkrecht zu einer Oberfläche des Verkleidungsteils erstrecken. Mit anderen Worten verläuft die jeweilige Haupterstreckungsrichtung der Bewegungselemente im Wesentlichen senkrecht zu einer Haupterstreckungsrichtung des Verkleidungsteils. Bewegungselemente, die sich im Wesentlichen senkrecht zu dem Verkleidungselement angeordnet sind, können einfach und Bauraum sparend hergestellt werden.

In einer Ausführungsform sind die Bewegungselemente stoffschlüssig mit dem Verkleidungsteil verbunden. Auf diese Weise kann eine zuverlässige Verbindung zwischen den Bewegungselementen und dem Verkleidungsteil bereitgestellt werden. Somit kann garantiert werden, dass die Bewegungselemente im Betrieb des Kraftfahrzeugs zuverlässig mit dem Verkleidungsteil verbunden bleiben. Weiterhin kann eine derartige stoffschlüssige Verbindung zwischen den Bewegungselementen und dem Verkleidungsteil einfach und kostengünstig bereitgestellt werden.

Bevorzugt sind die Bewegungselementen durch ein Klebeverfahren und/oder durch Reibschweißen mit dem Verkleidungsteil verbunden. Falls das Verkleidungsteil beispielsweise ein Stoßfänger ist, der aus Kunststoff gebildet ist, können die Bewegungselemente ebenfalls aus einem Kunststoff gebildet sein. In diesem Fall können die Bewegungselemente mittels Reibschweißen mit dem Verkleidungsteil verbunden werden. Weiterhin kann es vorgesehen sein, dass die Bewegungselemente beispielsweise an das Verkleidungsteil angespritzt sind. Falls das Verkleidungsteil aus einem Metall gebildet ist und die Bewegungselemente ebenfalls aus einem Metall gebildet sind, können die Bewegungselemente beispielsweise mittels eines Schweißverfahrens oder eines Lötverfahrens mit dem Verkleidungsteil verbunden werden. Es kann auch vorgesehen sein, dass die Bewegungselemente mittels eines Klebeverfahrens mit dem Verkleidungsteil verbunden werden. Somit kann eine zuverlässige und kostengünstige Verbindung zwischen den Bewegungselementen und dem Verkleidungsteil bereitgestellt werden.

In einer weiteren Ausführungsform ist es vorgesehen, dass die Bewegungselemente einteilig mit dem Verkleidungsteil ausgebildet sind. Für den Fall, dass die Bewegungselemente und das Verkleidungsteil aus Kunststoff gefertigt sind, kann die Verkleidungsvorrichtung mittels eines Spritzgussverfahrens hergestellt sein. Für den Fall, dass sowohl die Bewegungselemente als auch das Verkleidungsteil aus Metall gefertigt sind, kann ein entsprechendes Druckgussverfahren verwendet werden. Somit können die Bewegungselemente bereits bei der Fertigung des Verkleidungsteils integriert werden.
In einer bevorzugten Ausführungsform sind die Bewegungselemente ungleichmäßig verteilt zueinander angeordnet. Durch die ungleichmäßige Verteilung der Bewegungselemente auf der Oberfläche des Verkleidungselements kann beispielsweise verhindert werden, dass die Bewegungselemente durch die Schwingung des Verkleidungsteils zu der mechanischen Schwingung angeregt werden. Dabei ist es auch denkbar, dass die einzelnen Bewegungselemente unterschiedliche Formgebungen beziehungsweise Abmessungen aufweisen. Es kann auch vorgesehen sein, dass die Bewegungselemente aus unterschiedlichen Materialien gefertigt sind. Somit weisen beispielsweise die Bewegungselemente unterschiedliche Resonanzfrequenzen auf. Damit kann beispielsweise erreicht werden, dass die Schwingung des Verkleidungsteils auch gedämpft wird, falls die Schwingung nicht einer einzelnen Frequenz, sondern einem Frequenzbereich zugeordnet ist. Die Bewegungselemente können auch derart zueinander angeordnet sein, dass sich zumindest einige der Bewegungselemente bei ihrer Bewegung berühren. Somit wird Reibung zwischen den Bewegungselemente erzeugt, welche die Schwingung in Folge des Ultraschallsignals dämpft.

In einer weiteren Ausgestaltung sind die Bewegungselemente jeweils aus einem Kunststoff und/oder aus einer Keramik und/oder aus einem Metall gebildet. Beispielsweise können jeweils alle Bewegungselemente aus Kunststoff oder aus einer Keramik oder aus einem Metall gebildet sein. Es ist auch denkbar, dass ein Teil der Bewegungselemente aus einem Kunststoff und/oder ein Teil der Bewegungselemente aus einem Metall und/oder ein Teil der Bewegungselemente aus einer Keramik gefertigt sind. Somit kann beispielsweise erreicht werden, dass die unterschiedlichen Bewegungselemente unterschiedliche mechanische Eigenschaften beziehungsweise Schwingungseigenschaften aufweisen, die unterschiedlich auf die Schwingung des Verkleidungsteils reagieren. Somit kann die mechanische Schwingung des Verkleidungsteils zuverlässig gedämpft bzw. begrenzt werden.

gemäß der Erfindung weist die Dämpfungseinrichtung ein Deckelelement auf, das mit den Bewegungselementen auf einer dem Verkleidungsteil gegenüberliegenden Seite der Bewegungselemente verbunden ist. Somit kann beispielsweise zunächst das Deckelelement gefertigt werden, an dem die Bewegungselemente angeordnet sind. Ein derartiges Deckelelement, an dem die Bewegungselemente angeordnet sind, kann beispielsweise aus Kunststoff gefertigt sein und mittels eins Spritzgussverfahrens hergestellt sein. Alternativ dazu kann ein derartiges Deckelelement, an dem die Bewegungselemente angeordnet sind, aus Metall gefertigt sein und mittels eines Druckgussverfahrens hergestellt sein. Das Deckelelement, an dem die Bewegungselemente angeordnet sind, ist somit nach Art einer Bürste ausgebildet. Ein derartiges bürstenförmiges Element kann beispielsweise stoffschlüssig mit dem Verkleidungsteil verbunden werden. Hierzu kann ein Klebeverfahren verwendet werden. Somit können die Bewegungselemente auf einfache Weise an dem Verkleidungselement angeordnet werden.

In einer weiteren Ausführungsform weist die Dämpfungseinrichtung ein erstes ringförmiges Element mit einem ersten Durchmesser und ein zweites ringförmiges Element mit einem im Vergleich zum ersten Durchmesser größeren, zweiten Durchmesser, die konzentrisch zueinander auf dem Verkleidungsteil angeordnet sind, auf, wobei die Bewegungselemente in einem Zwischenraum zwischen dem ersten und dem zweiten ringförmigen Element angeordnet sind. Die beiden ringförmigen Elemente, die konzentrisch zueinander angeordnet sind, können beispielsweise an die Oberfläche des Verkleidungsteils angespritzt sein. Weiterhin ist es auch denkbar, dass die ringförmigen Elemente bei dem Herstellungsverfahren des Verkleidungsteils integriert werden. Innerhalb des ersten ringförmigen Elements ist der Aufnahmebereich für den Ultraschallsensor angeordnet. Somit wird der Ultraschallsensor von dem Dämpfungselement umgeben.

In einer bevorzugten Ausführungsform weist die Dämpfungseinrichtung ein Dämpfungsmaterial zum Dämpfen einer Bewegung der Bewegungselemente auf, wobei das Dämpfungsmaterial zumindest bereichsweise zwischen den Bewegungselementen angeordnet ist. Beispielsweise kann das Dämpfungsmaterial die Bewegungselemente umgeben. Dabei kann beispielsweise der Bereich zwischen den beiden ringförmigen Elementen mit dem Dämpfungsmaterial aufgefüllt sein. Dabei ist es auch denkbar, dass die Bewegungselemente nur zu einer vorbestimmten Höhe von dem Dämpfungsmaterial umgeben sind. Wenn die Bewegungselemente infolge der Schwingung des Verkleidungsteils zu Schwingungen angeregt werden, kann die jeweilige Schwingung der Bewegungselemente durch das Dämpfungselement gedämpft werden. Somit kann die Schwingung des Verkleidungsteils zuverlässig gedämpft werden.

Bevorzugt umfasst das Dämpfungsmaterial ein Elastomer, insbesondere einen Silikonschaum. Ein derartiger Silikonschaum kann beispielsweise dadurch gebildet werden, dass entsprechende Luftblasen innerhalb eines Silikons angeordnet sind. Das Silikon kann beispielsweise in einer flüssigen Phase bereitgestellt werden und zwischen die Bewegungselemente verteilt werden. Dort kann es entsprechend ausgehärtet werden. Somit kann auf einfache und kostengünstige Weise ein Dämpfungsmaterial zum Dämpfen der Bewegung der Bewegungselemente bereitgestellt werden.

Eine erfindungsgemäße Anordnung für ein Kraftfahrzeug umfasst eine erfindungsgemäße Verkleidungsvorrichtung und den Ultraschallsensor, welcher zum Aussenden und/oder Empfangen eines Ultraschallsignals ausgelegt ist, wobei der Ultraschallsensor stoffschlüssig mit der Verkleidungsvorrichtung verbunden ist. Dabei ist der Ultraschallsensor bevorzugt in dem Aufnahmebereich der Verkleidungsvorrichtung angeordnet. Insbesondere kann der Ultraschallsensor mit einem entsprechenden Klebstoff mit dem Verkleidungsteil stoffschlüssig verbunden sein.

Bevorzugt umfasst die Anordnung ein Gehäuse, in welchem der Ultraschallsensor und ein Entkopplungselement zum Entkoppeln des Ultraschallsensors von dem Gehäuse angeordnet sind. Das Gehäuse kann beispielsweise als entsprechender Montagedeckel ausgebildet sein. Das Gehäuse kann beispielsweise aus Kunststoff gefertigt sein. In dem Gehäuse ist weiterhin ein Entkopplungselement vorgesehen, das beispielsweise dazu dient, den Ultraschallsensor von dem Gehäuse mechanisch zu entkoppeln. Das Entkopplungselement kann beispielsweise aus Keramik oder einem Elastomer gebildet sein.

Ein erfindungsgemäßes Kraftfahrzeug umfasst zumindest eine erfindungsgemäße Anordnung. Das Kraftfahrzeug ist insbesondere als Personenkraftwagen ausgebildet. Die Anordnung kann beispielsweise einem Fahrerassistenzsystem des Kraftfahrzeugs zugeordnet sein. Ein solches Fahrerassistenzsystem kann beispielsweise ein Parkassistenzsystem, ein System zur Totwinkelüberwachung, ein System zur Abstandshaltung, ein Bremsassistenzsystem oder dergleichen sein.

Ein erfindungsgemäßes Verfahren dient zum Herstellen einer Verkleidungsvorrichtung für ein Kraftfahrzeug. Hierbei wird ein Verkleidungsteil, welches einen Aufnahmebereich zum Anordnen eines Ultraschallsensors aufweist, bereitgestellt. Zudem wird eine Dämpfungseinrichtung zum Dämpfen einer infolge eines durch den Ultraschallsensor ausgesendeten Ultraschallsignals erzeugten Schwingung bereitgestellt, wobei die Dämpfungseinrichtung den Aufnahmebereich zumindest bereichsweise umgibt. Die Dämpfungseinrichtung weist Bewegungselemente auf, die mit dem Verkleidungsteil verbunden werden, wobei eine jeweilige Formgebung und/oder eine mechanische Eigenschaft der Bewegungselemente derart ausgelegt wird, dass zumindest ein Teil der Bewegungselemente durch die Schwingung zu einer Bewegung anregbar ist.
Die mit Bezug auf die erfindungsgemäße Verkleidungsvorrichtung vorgestellten bevorzugten Ausführungsformen und deren Vorteile gelten entsprechend für die erfindungsgemäße Anordnung, das erfindungsgemäße Kraftfahrzeug sowie das erfindungsgemäße Verfahren.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung eine Anordnung für ein Kraftfahrzeug, welche eine Verkleidungsvorrichtung und einen Ultraschallsensor umfasst;
- Fig. 2: die Anordnung gemäß Fig. 1 in einer weiteren Ausführungsform;
- Fig. 3: die Anordnung gemäß Fig. 2 in einer Draufsicht;
- Fig. 4: eine Anordnung gemäß der Erfindung; und
- Fig. 5: die Anordnung gemäß Fig. 2 in einer weiteren Ausführungsform.

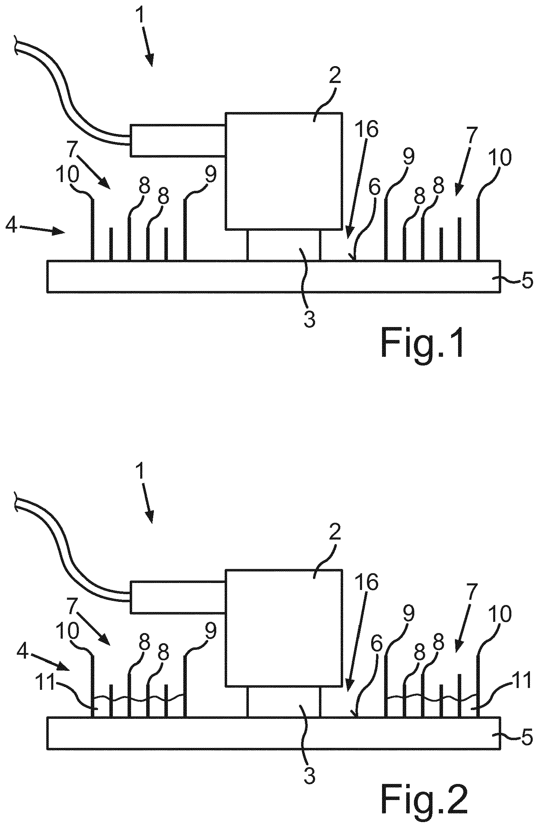

Fig. 1 zeigt eine Anordnung eines für ein Kraftfahrzeug in einer geschnittenen Seitenansicht. Die Anordnung 1 umfasst einen Ultraschallsensor 2. Der Ultraschallsensor 2 dient dazu, ein Ultraschallsignal auszusenden und/oder ein Ultraschallsignal zu empfangen. Der Ultraschallsensor 2 umfasst eine Membran 3, welche topfförmig ausgebildet ist und bevorzugt aus Aluminium gefertigt ist. Zudem umfasst der Ultraschallsensor 2 einen hier nicht dargestellten Aktor, der insbesondere ein piezoelektrisches Element umfasst. Der Aktor dient dazu, die Membran 3 in mechanische Schwingungen zu versetzen. Zudem können mit dem piezoelektrischen Element mechanische Schwingungen der Membran 3 erfasst werden.

Des Weiteren umfasst die Anordnung 1 eine Verkleidungsvorrichtung 4. Die Verkleidungsvorrichtung 4 umfasst wiederum ein Verkleidungsteil 5. Das Verkleidungsteil 5 kann beispielsweise durch ein Karosseriebauteil eines Kraftfahrzeugs gebildet sein. Beispielsweise kann das Verkleidungsteil 5 ein Stoßfänger eines Kraftfahrzeugs sein. Es ist auch denkbar, dass das Verkleidungsteil 5 ein Kotflügel oder ein Teil einer Tür des Kraftfahrzeugs ist. Das Verkleidungsteil 5 kann aus einem Kunststoff oder aus einem Metall gebildet sein.

Der Ultraschallsensor 2 ist auf einer Rückseite 6 des Verkleidungsteils 5 in einem Aufnahmebereich 16 der Verkleidungsvorrichtung 4 angeordnet. Die Rückseite 6 des Verkleidungsteils 5 ist der Teil des Verkleidungsteils 5 des Kraftfahrzeugs, der von außen nicht sichtbar ist. Der Ultraschallsensor 2 ist mit seiner Frontseite, also in Aussenderichtung des Ultraschallsignals, mit der Rückseite 6 des Verkleidungsteils 5 verbunden. Insbesondere ist der Ultraschallsensor 2 stoffschlüssig, beispielsweise mittels eines Klebstoffs, mit dem Verkleidungsteil 5 verbunden. Bei Betrieb des Ultraschallsensors 2 werden von dem Ultraschallsensor 2 Ultraschallsignale ausgesendet. Diese werden durch das Verkleidungsteil 5 hindurch geleitet. Dabei wird das Verkleidungsteil 5 zu mechanischen Schwingungen angeregt. Es kann auch der Fall sein, dass sich Körperschall innerhalb des Verkleidungsteils 5 ausbreitet.

Um die Schwingung des Verkleidungsteils 5 zu dämpfen, weist die Verkleidungsvorrichtung 4 eine Dämpfungseinrichtung 7 auf. Die Dämpfungseinrichtung 7 weist eine Mehrzahl von Bewegungselementen 8 auf. Die Bewegungselemente 8 können nach Art von Zotten ausgebildet sein. Die Bewegungselemente 8 sind auf der Rückseite 6 des Verkleidungsteils angeordnet. Dabei sind die Bewegungselemente 8 derart angeordnet, dass die Haupterstreckungsrichtung der Bewegungselemente 8 im Wesentlichen senkrecht zu der Haupterstreckungsrichtung des Verkleidungsteils 5 verläuft.

In dem vorliegenden Ausführungsbeispiel weist das Dämpfungselement 7 ein erstes ringförmiges Element 9, das einen ersten Durchmesser aufweist, und ein zweites ringförmiges Element 10, das einen im Vergleich zum ersten Durchmesser größeren zweiten Durchmesser aufweist, auf. Dabei sind die beiden ringförmigen Elemente 9 und 10 konzentrisch zueinander angeordnet. In dem Zwischenraum zwischen dem ersten ringförmigen Element 9 und dem zweiten ringförmigen Element 10 sind die Bewegungselemente 8 angeordnet.

Die Bewegungselemente 8 können beispielsweise aus Kunststoff, aus Metall und/oder aus Keramik gefertigt sein. Die Formgebung und/oder die mechanischen Eigenschaften der Bewegungselemente 8 können so gewählt sein, dass diese durch die Schwingung des Verkleidungsteils 5, die infolge des Ultraschallsignals, das von dem Ultraschallsensor 2 ausgesendet und/oder empfangen wird, bewirkt wird, zu mechanischen Schwingungen angeregt wird. Beispielsweise können die Bewegungselemente 8 zur Schwingung in ihrer Resonanzfrequenz angeregt werden. Somit kann die Schwingungsenergie des Verkleidungsteils 5 in die Bewegungsenergie der Bewegungselemente 8 gewandelt werden. Somit kann die Schwingung des Verkleidungsteils 5 gedämpft und/oder lokal innerhalb der Dämpfungseinrichtung 7 begrenzt werden. Die Bewegungselemente 8 können dabei unterschiedliche Resonanzfrequenzen aufweisen. Beispielsweise können die Bewegungselemente 8 unterschiedliche Längen aufweisen. Insbesondere sind die Bewegungselemente 8 innerhalb der Dämpfungseinrichtung 7 ungleichmäßig angeordnet. Somit kann beispielsweise eine Schwingung des Verkleidungselements 5 zuverlässig gedämpft werden.

Fig. 2 zeigt die Anordnung gemäß Fig. 1 in einer weiteren Ausführungsform. In diesem Fall ist ein Dämpfungsmaterial 11 zwischen den Bewegungselementen 8 angeordnet. Das Dämpfungsmaterial 11 ist in dem Zwischenraum zwischen dem ersten ringförmigen Element 9 und dem zweiten ringförmigen Element 10 angeordnet. Das Dämpfungsmaterial 11 kann beispielsweise durch ein Elastomer, insbesondere einen Silikonschaum, gebildet sein. Bei dem vorliegenden Ausführungsbeispiel erstreckt sich das Dämpfungsmaterial 11 nur bis zu einer vorbestimmten Höhe der Bewegungselemente 8. Das Dämpfungsmaterial 8 dient zum Dämpfen einer Bewegung beziehungsweise einer mechanischen Schwingung der Bewegungselemente 8.

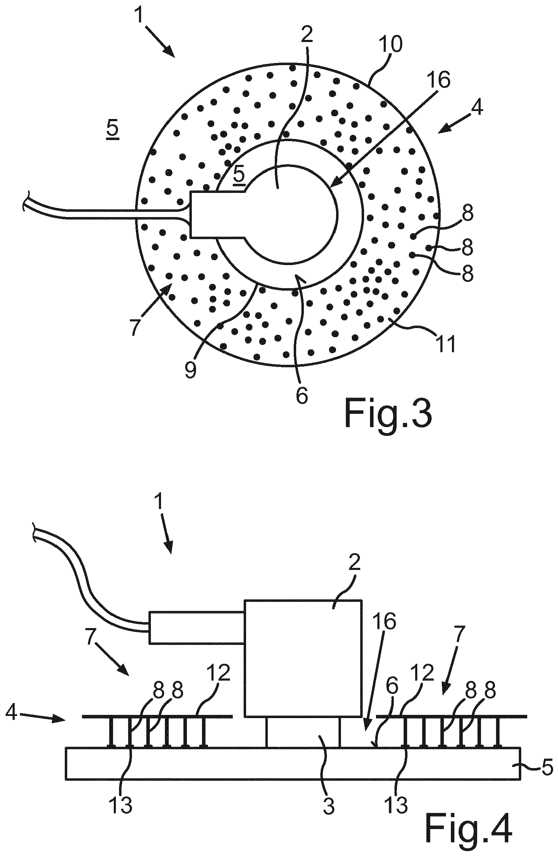

Fig. 3 zeigt die Anordnung 1 gemäß Fig. 2 in einer Draufsicht. Hierbei ist insbesondere zu erkennen, dass die Bewegungselemente 8 innerhalb der Dämpfungseinrichtung 7 ungleichmäßig verteilt zueinander angeordnet sind.

Fig. 4 zeigt eine Anordnung 1 gemäß der Erfindung . Hierbei umfasst die Dämpfungseinrichtung 4 ein Deckelelement 12. Im Vergleich zu den Anordnungen gemäß Fig. 1 und Fig. 2 ist vorliegend kein erstes ringförmiges Element 9 und kein zweites ringförmiges Element 10 vorgesehen. An dem Deckelelement 12 sind die Bewegungselemente 8 angeordnet. Beispielsweise kann das Deckelelement 12 mit den Bewegungselementen 8 stoffschlüssig verbunden sein. Es kann auch vorgesehen sein, dass das Deckelelement 12 mit den Bewegungselementen 8 einteilig ausgebildet ist. Vorliegend bilden das Deckelelement 12 und die Bewegungselemente 8 eine bürstenförmige Anordnung. Zudem sind die Bewegungselemente 8 stoffschlüssig mit dem Verkleidungsteil 5, beispielsweise mittels eines Klebstoffs 13, verbunden.

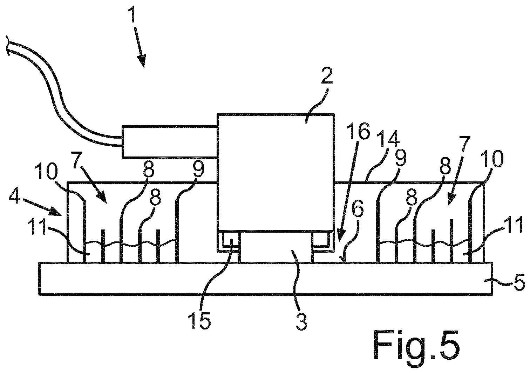

Fig. 5 zeigt die Anordnung gemäß Fig. 2 in einer weiteren Ausführungsform. In diesem Fall umfasst die Anordnung 1 zudem ein Gehäuse 14. Das Gehäuse 14 kann beispielsweise aus einem Kunststoff gefertigt sein. Des Weiteren ist innerhalb des Gehäuses 14 ein Entkopplungselement 15 vorgesehen. Das Entkopplungselement 15 umgibt in dem vorliegenden Ausführungsbeispiel die Membran 3 konzentrisch. Das Entkopplungselement 15 kann beispielsweise aus Keramik oder einem Kunststoff gefertigt sein. Das Entkopplungselement 15 dient dazu, den Ultraschallsensor 2 beziehungsweise die Membran 3 mechanisch von dem Gehäuse 14 zu entkoppeln.

## Patentansprüche

1. Verkleidungsvorrichtung (4) für ein Kraftfahrzeug, mit einem Verkleidungsteil (5), welches einen Aufnahmebereich (16) zum Anordnen eines Ultraschallsensors (2) aufweist, und mit einer Dämpfungseinrichtung (7) zum Dämpfen einer in Folge eines durch den Ultraschallsensor (2) ausgesendeten Ultraschallsignals erzeugten Schwingung, wobei die Dämpfungseinrichtung (7) den Aufnahmebereich (16) zumindest bereichsweise umgibt, wobei die Dämpfungseinrichtung (7) Bewegungselementen (8) aufweist, die mit dem Verkleidungsteil (5) verbunden sind, wobei eine jeweilige Formgebung und/oder eine mechanische Eigenschaft der Bewegungselemente (8) derart ausgelegt ist, dass zumindest ein Teil der Bewegungselemente (8) durch die Schwingung zu einer Bewegung anregbar ist, **dadurch gekennzeichnet, dass** die Dämpfungseinrichtung (7) ein Deckelelement (12) aufweist, das mit den Bewegungselementen (8) auf einer dem Verkleidungsteil (5) gegenüberliegenden Seite der Bewegungselemente (8) verbunden ist.

2. Verkleidungsvorrichtung (4) nach Anspruch 1,
**dadurch gekennzeichnet, dass**
die Bewegungselementen (8) mit dem Verkleidungsteil (5) derart verbunden sind, dass sich die Bewegungselemente (8) im Wesentlichen senkrecht zu einer Oberfläche des Verkleidungsteils (5) erstrecken.

3. Verkleidungsvorrichtung (4) nach Anspruch 1 oder 2,
**dadurch gekennzeichnet, dass**
die Bewegungselementen (8) stoffschlüssig mit dem Verkleidungsteil (5) verbunden sind.

4. Verkleidungsvorrichtung (4) nach Anspruch 3,
**dadurch gekennzeichnet, dass**
die Bewegungselemente (8) durch ein Klebeverfahren und/oder durch Reibschweißen mit dem Verkleidungsteil (5) verbunden sind.

5. Verkleidungsvorrichtung (4) nach Anspruch 1 oder 2,
**dadurch gekennzeichnet, dass**
die Bewegungselementen (8) einteilig mit dem Verkleidungsteil (5) ausgebildet sind.

6. Verkleidungsvorrichtung (4) nach einem der vorhergehenden Ansprüche,
**dadurch gekennzeichnet, dass**
die Bewegungselementen (8) ungleichmäßig verteilt zueinander angeordnet sind.

7. Verkleidungsvorrichtung (4) nach einem der vorhergehenden Ansprüche,
**dadurch gekennzeichnet, dass**
die Bewegungselemente (8) jeweils aus einem Kunststoff und/oder aus einer Keramik und/oder aus einem Metall gebildet sind.

8. Verkleidungsvorrichtung (4) nach einem der vorhergehenden Ansprüche,
**dadurch gekennzeichnet, dass**
die Dämpfungseinrichtung (7) ein ersten ringförmiges Element (9) mit einem ersten Durchmesser und ein zweites ringförmiges Element (10) mit einem im Vergleich zum ersten Durchmesser größeren, zweiten Durchmesser, die konzentrisch zueinander auf dem Verkleidungsteil (5) angeordnet sind, aufweist, wobei die Bewegungselemente (8) in einem Zwischenraum zwischen dem ersten und dem zweiten ringförmigen Element (9, 10) angeordnet sind.

9. Verkleidungsvorrichtung (4) nach einem der vorhergehenden Ansprüche,
**dadurch gekennzeichnet, dass**
die Dämpfungseinrichtung (7) ein Dämpfungsmaterial (11) zum Dämpfen einer Bewegung der Bewegungselemente (8) aufweist, wobei das Dämpfungsmaterial (11) zumindest bereichsweise zwischen den Bewegungselementen (8) angeordnet ist.

10. Verkleidungsvorrichtung (4) nach Anspruch 9,
**dadurch gekennzeichnet, dass**
das Dämpfungsmaterial (11) ein Elastomer, insbesondere einen Silikonschaum, umfasst.

11. Anordnung (1) für ein Kraftfahrzeug, mit einer Verkleidungsvorrichtung (4) nach einem der vorhergehenden Ansprüche und dem Ultraschallsensor (2), welcher zum Aussenden und/oder Empfangen eines Ultraschallsignals ausgelegt ist, wobei der Ultraschallsensor (2) stoffschlüssig mit der Verkleidungsvorrichtung (4) verbunden ist.

12. Anordnung (1) nach Anspruch 11,
**dadurch gekennzeichnet, dass**
die Anordnung ein Gehäuse (14) umfasst, in welchem der Ultraschallsensor (2) und ein Entkopplungselement (15) zum Entkoppeln des Ultraschallsensors (2) von dem Gehäuse (14) angeordnet ist.

13. Kraftfahrzeug mit zumindest einer Anordnung (1) nach Anspruch 12.

14. Verfahren zum Herstellen einer Verkleidungsvorrichtung (4) für ein Kraftfahrzeug, bei welchem ein Verkleidungsteil (5), welches einen Aufnahmebereich (16) zum Anordnen eines Ultraschallsensors (2) aufweist, bereitgestellt wird, und eine Dämpfungseinrichtung (7) zum Dämpfen einer in Folge eines durch den Ultraschallsensor (2) ausgesendeten Ultraschallsignals erzeugten Schwingung bereitgestellt wird, wobei die Dämpfungseinrichtung (7) den Aufnahmebereich (16) zumindest bereichsweise umgibt, wobei die Dämpfungseinrichtung (7) Bewegungselemente (8) aufweist, die mit dem Verkleidungsteil (5) verbunden werden, wobei eine jeweilige Formgebung und/oder eine mechanische Eigenschaft der Bewegungselemente (8) derart ausgelegt wird, dass zumindest ein Teil der Bewegungselemente (8) durch die Schwingung zu einer Bewegung anregbar ist, **dadurch gekennzeichnet, dass** die Dämpfungseinrichtung (7) ein Deckelelement (12) aufweist, das mit den Bewegungselementen (8) auf einer dem Verkleidungsteil (5) gegenüberliegenden Seite der Bewegungselemente (8) verbunden wird.

## Claims

1. Trim device (4) for a motor vehicle, having a trim part (5) which has an accommodation region (16) for the arrangement of an ultrasonic sensor (2), and having a damping apparatus (7) for damping a vibration generated as a result of an ultrasound signal emitted by the ultrasonic sensor (2), the damping apparatus (7) at least partly surrounding the accommodation region (16), the damping apparatus (7) having movement elements (8) which are connected to the trim part (5), a respective shape and/or a mechanical property of the movement elements (8) being designed such that at least some of the movement elements (8) can be excited to move by the vibration,
**characterized in that** the damping apparatus (7) has a cover element (12), which is connected to the movement elements (8) on a side of the movement elements (8) that is opposite the trim part (5).

2. Trim device (4) according to Claim 1,
**characterized in that**
the movement elements (8) are connected to the trim part (5) in such a way that the movement elements (8) extend substantially at right angles to the surface of the trim part (5).

3. Trim device (4) according to Claim 1 or 2,
**characterized in that**
the movement elements (8) are connected integrally to the trim part (5).

4. Trim device (4) according to Claim 3,
**characterized in that**
the movement elements (8) are connected to the trim part (5) by an adhesive bonding method and/or by frictional welding.

5. Trim device (4) according to Claim 1 or 2, **characterized in that**
the movement elements (8) are formed in one piece with the trim part (5).

6. Trim device (4) according to one of the preceding claims,
**characterized in that**
the movement elements (8) are arranged to be distributed non-uniformly relative to one another.

7. Trim device (4) according to one of the preceding claims
**characterized in that**
the movement elements (8) are each formed from a plastic and/or from a ceramic and/or from a metal.

8. Trim device (4) according to one of the preceding claims,
**characterized in that**
the damping apparatus (7) has a first annular element (9) with a first diameter and a second annular element (10) with a second diameter that is larger as compared with the first diameter, which are arranged concentrically relative to each other on the trim part (5), wherein the movement elements (8) are arranged in an interspace between the first and the second annular element (9, 10).

9. Trim device (4) according to one of the preceding claims,
**characterized in that**
the damping apparatus (7) has a damping material (11) for damping a movement of the movement elements (8), wherein the damping material (11) is at least partly arranged between the movement elements (8).

10. Trim device (4) according to Claim 9,
**characterized in that**
the damping material (11) comprises an elastomer, in particular a silicone foam.

11. Assembly (1) for a motor vehicle, having a trim device (4) according to one of the preceding claims and the ultrasonic sensor (2), which is designed to emit and/or receive an ultrasound signal, wherein the ultrasonic sensor (2) is connected integrally to the trim device (4).

12. Assembly (1) according to Claim 11,
**characterized in that**
the assembly comprises a housing (14), in which the ultrasonic sensor (2) and a decoupling element (15) for decoupling the ultrasonic sensor (2) from the housing (14) are arranged.

13. Motor vehicle having at least one assembly (1) according to Claim 12.

14. Method for producing a trim device (4) for a motor vehicle, in which a trim part (5) which has an accommodation region (16) for the arrangement of an ultrasonic sensor (2) is provided, and a damping apparatus (7) for damping a vibration generated as a result of an ultrasound signal emitted by the ultrasonic sensor (2) is provided, the damping apparatus (7) at least partly surrounding the accommodation region (16), the damping apparatus (7) having movement elements (8) which are connected to the trim part (5), a respective shape and/or a mechanical property of the movement elements (8) being designed such that at least some of the movement elements (8) can be excited to move by the vibration,
**characterized in that** the damping apparatus (7) has a cover element (12), which is connected to the movement elements (8) on a side of the movement elements (8) that is opposite the trim part (5).

## Revendications

1. Dispositif d'habillage (4) pour un véhicule automobile, comprenant une partie d'habillage (5) qui présente une région de logement (16) pour recevoir un capteur à ultrasons (2), et un dispositif d'amortissement (7) pour l'amortissement d'une oscillation produite suite à un signal à ultrasons émis par le capteur à ultrasons (2), le dispositif d'amortissement (7) entourant au moins en partie la région de réception (16), le dispositif d'amortissement (7) présentant des éléments mobiles (8) qui sont connectés à la partie d'habillage (5), une forme respective et/ou une propriété mécanique respective des éléments mobiles (8) étant conçues de telle sorte qu'au moins une partie des éléments mobiles (8) puissent être incités à se déplacer sous l'effet de l'oscillation, **caractérisé en ce que** le dispositif d'amortissement (7) présente un élément de couvercle (12) qui est connecté aux éléments mobiles (8) sur un côté des éléments mobiles (8) opposé à la partie d'habillage (5).

2. Dispositif d'habillage (4) selon la revendication 1,
**caractérisé en ce que**
les éléments mobiles (8) sont connectés à la partie d'habillage (5) de telle sorte que les éléments mobiles (8) s'étendent essentiellement perpendiculairement à une surface de la partie d'habillage (5).

3. Dispositif d'habillage (4) selon la revendication 1 ou 2,
**caractérisé en ce que**
les éléments mobiles (8) sont connectés par engagement par liaison de matière à la partie d'habillage (5).

4. Dispositif d'habillage (4) selon la revendication 3,
**caractérisé en ce que**
les éléments mobiles (8) sont connectés par un procédé de collage et/ou par soudage par friction à la partie d'habillage (5).

5. Dispositif d'habillage (4) selon la revendication 1 ou 2,
**caractérisé en ce que**
les éléments mobiles (8) sont réalisés d'une seule pièce avec la partie d'habillage (5).

6. Dispositif d'habillage (4) selon l'une quelconque des revendications précédentes,
**caractérisé en ce que**
les éléments mobiles (8) sont disposés de manière répartie irrégulièrement les uns par rapport aux autres.

7. Dispositif d'habillage (4) selon l'une quelconque des revendications précédentes,
**caractérisé en ce que**
les éléments mobile (8) sont à chaque fois formés d'un plastique et/ou d'une céramique et/ou d'un métal.

8. Dispositif d'habillage (4) selon l'une quelconque des revendications précédentes,
**caractérisé en ce que**
le dispositif d'amortissement (7) présente un premier élément annulaire (9) avec un premier diamètre et un deuxième élément annulaire (10) avec un deuxième diamètre plus grand que le premier diamètre, qui sont disposés concentriquement l'un par rapport à l'autre sur la partie d'habillage (5), les éléments mobiles (8) étant disposés dans un espace intermédiaire entre le premier et le deuxième élément annulaire (9, 10) .

9. Dispositif d'habillage (4) selon l'une quelconque des revendications précédentes,
**caractérisé en ce que**
le dispositif d'amortissement (7) présente un matériau d'amortissement (11) pour l'amortissement d'un mouvement des éléments mobiles (8), le matériau d'amortissement (11) étant disposés au moins en partie entre les éléments mobiles (8).

10. Dispositif d'habillage (4) selon la revendication 9,
**caractérisé en ce que**
le matériau d'amortissement (11) comprend un élastomère, en particulier une mousse de silicone.

11. Agencement (1) pour un véhicule automobile, comprenant un dispositif d'habillage (4) selon l'une quelconque des revendications précédentes, et le capteur à ultrasons (2) qui est conçu pour émettre et/ou recevoir un signal à ultrasons, le capteur à ultrasons (2) étant connecté par liaison de matière au dispositif d'habillage (4).

12. Agencement (1) selon la revendication 11,
**caractérisé en ce que**
l'agencement comprend un boîtier (14) dans lequel est disposé le capteur à ultrasons (2) et un élément de désaccouplement (15) pour désaccoupler le capteur à ultrasons (2) du boîtier (14).

13. Véhicule automobile comprenant au moins un agencement (1) selon la revendication 12.

14. Procédé de fabrication d'un dispositif d'habillage (4) pour un véhicule automobile, dans lequel est prévue une partie d'habillage (5) qui présente une région de réception (16) pour disposer un capteur à ultrasons (2), et un dispositif d'amortissement (7) pour l'amortissement d'une oscillation générée suite à un signal à ultrasons émis par le capteur à ultrasons (2), le dispositif d'amortissement (7) entourant la région de réception (16) au moins en partie, le dispositif d'amortissement (7) présentant des éléments mobiles (8) qui sont connectés à la partie d'habillage (5), une forme respective et/ou une propriété mécanique respective des éléments mobiles (8) étant conçues de telle sorte qu'au moins une partie des éléments mobiles (8) puissent être incités à se déplacer sous l'effet de l'oscillation, **caractérisé en ce que** le dispositif d'amortissement (7) présente un élément de couvercle (12) qui est connecté aux éléments mobiles (8) sur un côté des éléments mobiles (8) opposé à la partie d'habillage (5).
